Europäisches Patentamt

European Patent Office

Office européen des brevets

(11) Publication number: **0 232 927**
**A2**

## (12) EUROPEAN PATENT APPLICATION

(21) Application number: **87200037.7**

(22) Date of filing: **14.01.87**

(51) Int. Cl.⁴: **B29B 9/06**

The title of the invention has been amended (Guidelines for Examination in the EPO, A-III, 7.3).

(30) Priority: **17.01.86 IT 1910386**

(43) Date of publication of application:
**19.08.87 Bulletin 87/34**

(84) Designated Contracting States:
**DE FR GB**

(71) Applicant: **POMINI FARREL S.p.A.**
**Via Leonardo da Vinci 20**
**I-21053 Castellanza Varese(IT)**

(72) Inventor: **Guggiari, Andrea**
**c/o Pomini Farrel S.p.A.,Via Leonardo da**
**Vinci 20**
**Castellanza Verese(IT)**

(74) Representative: **Raimondi, Alfredo, Dott. Ing.**
**Prof. et al**
**Studio Tecnico Consulenza Brevetti Piazzale**
**Cadorna 15**
**I-20123 Milano(IT)**

(54) **Underwater pelletiser.**

(57) An apparatus for cutting extruded plastics material into granules to be transported by a flow of liquid, according to the invention, comprises a rotor having radial blades rotating against the mouth of a plastics material extrusion head, such rotor being contained within a cylindrical cutting chamber which is coaxial with it and is provided with an inlet pipe and an outlet pipe for liquid material, the inlet pipe being substantially tangential to the cylindrical lateral wall of the cutting chamber and entering it in the same direction as the direction of rotation of the rotor whereas the outlet pipe is substantially tangential to the cylindrical lateral wall of the cutting chamber and leaves it in the same direction as the movement of the liquid within it, upstream of the outlet from the inlet pipe.

Fig. 2

## APPARATUS FOR CUTTING EXTRUDED PLASTICS MATERIAL INTO GRANULES TO BE TRANSPORTED BY A FLOW OF LIQUID.

The present invention relates to an apparatus for cutting extruded plastics material into granules to be transported by a flow of liquid, whereby granules are obtained for a moulding process or other transformation.

For the production of articles made of thermoplastics resins, the required material needs to be available in an easily transportable form to be fed to the forming machines in the best condition to achieve quick and economical production.

To this end, the plastics material is generally extruded in filaments which are then cut into granules by machines called granulation heads.

Some of these machines use a flow of water which is poured over the granules as soon as they have been cut by rotor blades and which transports them from the cutting station to a collecting station.

Known apparatuses of this type are provided with a chamber housing rotor blades facing the front wall of an extrusion head or filament plate, which is crossed, in a substantially diametrical direction, by a flow of water entering the cutting chamber from one side, spreading to fill up all of the available space, and leaving from the opposite side of the chamber carrying with it the granules of material. In this arrangement the water flows in the same direction as that of the rotating rotor blades only in a confined area and this causes a turbulent flow in the cutting chamber, considerable speed being reached by the flowing water and by the blades of the rotor, so that hydrodynamic pressure is exerted on the moving rotor blades causing the blades to become deformed and varying the loads intended for them, hence abnormal wear of the blades and of the filament plate occurs resulting in the need for particularly tough and heavy blades to be made, so as to avoid deformation.

One is therefore confronted with the problem of avoiding such wear and tear and the alteration in the value of the jamming load on the blades against the extrusion head, which may cause irregular cutting of the granules, and at the same time obtaining an apparatus wherein the opening of the cutting chamber and the adjustment of the jamming load are easy and quick, being very compact and simple in construction.

The above results are obtained by the present invention which provides an apparatus for cutting extruded plastics material into granules to be transported by a flow of liquid, comprising a rotor equipped with radial blades and operated by a motor assembly and rotating in rubbing contact with the outlet surface of the extrusion head for the plastics material, such rotor being contained within a cylindrical cutting chamber coaxial with it, which is provided with at least one inlet and one outlet pipe for the liquid, the inlet pipe being substantially tangential to the cylindrical side wall of the cutting chamber and entering it in the same direction as the direction of rotation of the rotor, whereas the outlet pipe has its axis substantially tangential to the cylindrical side wall of the cutting chamber and leaves it in the same direction as the movement of the liquid within it, upstream of the outlet from the inlet pipe, there also being provided members for supporting and for adjusting the axial position of the rotor within the cutting chamber.

In particular, the cutting chamber is provided with an inlet pipe whose axis is tangential to it, the inlet pipe entering via the cylindrical side wall, whereas the outlet pipe, whose axis is also tangential, enters the chamber via the annular base wall, its axis being oblique relative to the wall and its direction being the same as that of the inlet pipe, thus defining for the liquid flowing inside it a substantially helical path, at reduced speed.

The rotor is equipped with a number of radial arms projecting from a central hub, such arms carrying equally angled oblique seats intended to removably receive replaceable flat cutting blades of reduced thickness.

The slanting of the blade seats on the rotor arms keeps the blades in rubbing contact with the outlet surface of the extrusion head in the planned direction of rotation of the rotor.

The inlet pipe takes the liquid inside the cutting chamber in the same direction as that of the rotating rotor and both the speed of rotation of the rotor and the amount of liquid allowed into the cutting chamber are such, in relation to the size of the rotor and of the cutting chamber, that the speed of flow of the liquid inside the cutting chamber is substantially equal to the peripheral speed of rotation of the rotor.

The members for supporting and for adjusting the axial position of the rotor within the cutting chamber comprise a bush housing revolving supports for a shaft carrying the rotor slidingly inserted within a fixed annular seat, there being provided screw means, associated with a controlling adjusting ring, which, when operated, enable the axial position of the bush inside the seat to be varied. There is suitably provided a graduated scale associated with the screw means enabling the amount of axial displacement achieved by operating the screw means and the load applied to the rotor against the surface of the extrusion head to be seen; such a scale can be adjusted to a given position according to the size of the blades mounted on the rotor.

More details will be found in the following description, with reference to the attached drawings, wherein:

Fig. 1 is an external overall view of the apparatus according to the invention;

Fig. 2 is an enlarged cross-section of the cutting assembly;

Fig. 3 shows a cross-section of the cutting chamber along a line III-III of Fig. 5;

Fig. 4 shows a cross-section of the cutting chamber along a line IV-IV of Fig. 3;

Fig. 5 shows a cross-section of the cutting chamber along a line V-V of Fig. 3;

Fig. 6 shows a detail of the rotor carrying the cutting blades.

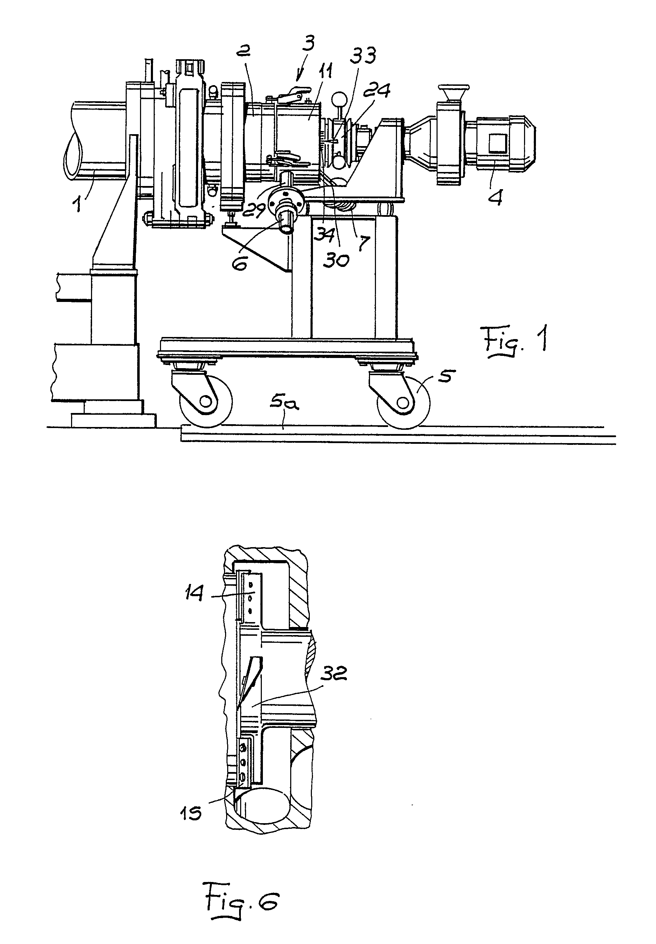

As shown in Fig. 1, the reference numeral 1 indicates an extruder, of which only the end part is shown, whose extrusion head 2 carries a cutting arrangement 3 operated by a motor controlled reducer unit 4, which can be separated from the extrusion head and moved away by means of wheels 5 and tracks 5a.

The cutting arrangement is provided with pipe connections 6 and 7, for filling the cutting chamber with water and for draining the water, respectively.

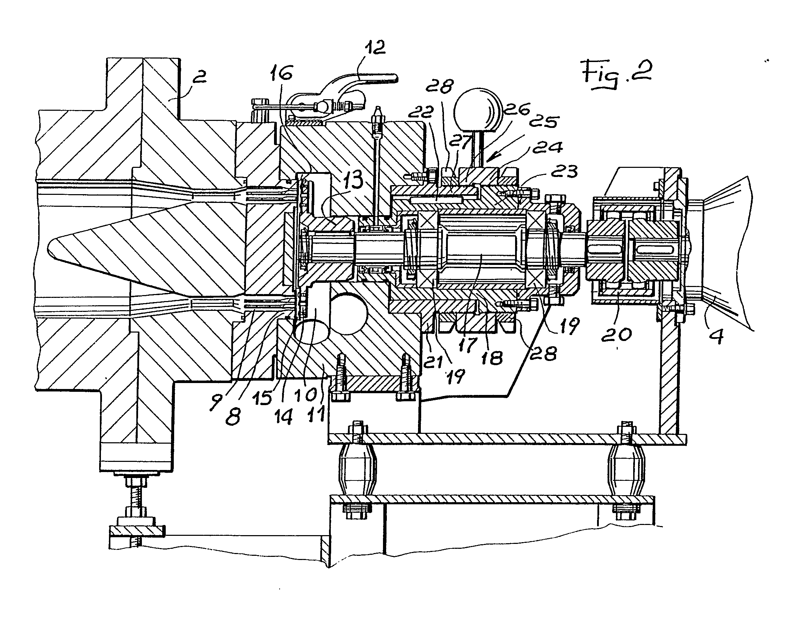

As shown in more detail in Fig. 2, the extrusion head 2 comprises a number of nozzles arranged on a crown 8 which feed the plastics material, in filament form, into a cutting chamber 10 arranged within a body 11, secured to the extrusion head by means of lever operated retaining rods 12, or similar removable connections with gaskets in between.

Inside the chamber 10, there is a cutting rotor 13, whose radial arms 14 carry blades 15 which slope in the same direction and are in rubbing contact with the front surface of the extrusion head 2, in correspondence with the exit crown 16 of the extruded plastics material.

The rotor 13 is carried by a shaft 17, which is rotatably supported within a sliding bush 18 by means of supports 19 and is connected to the motor reducer unit 4 via a coupling 20.

The bush 18 is able to slide axially within a seat 21 and is rotatably retained within it by means of a tongue 22 or the like. It has an outer threaded part 23 on which the threaded part 24 of an adjusting ring 25 is screwed, the adjusting ring 25 having a further threaded part 26 which screws up, in an opposite direction from that of part 24, on a corresponding outer thread of a projecting sleeve 27 of the seat 21. Threaded ring nuts 28 allow the rotation of the adjusting ring to be controlled by locking it in a required position of rotation.

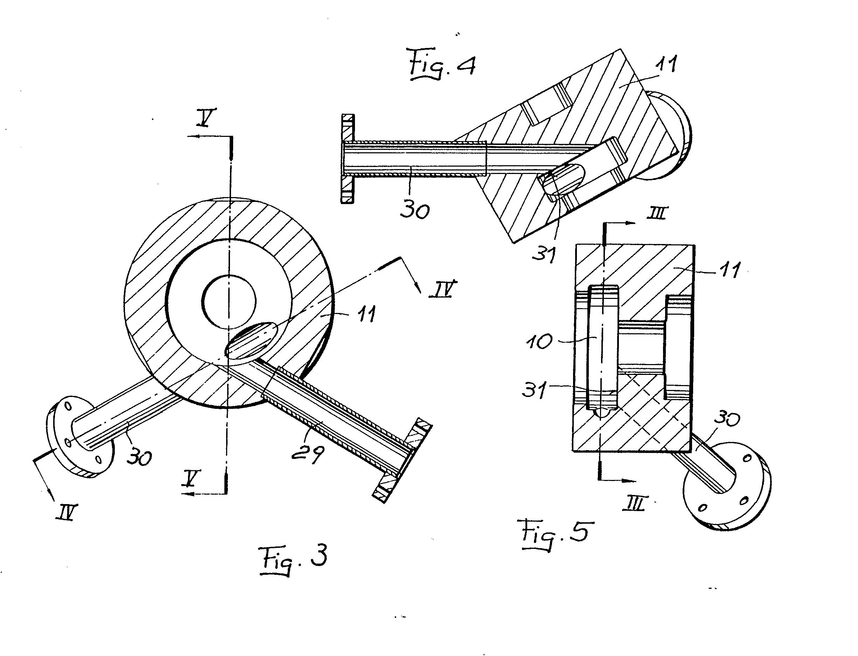

As shown in Figures 3, 4 and 5, the body 11 houses the cylindrical cutting chamber 10 which has a tangential inlet pipe 29 and an outlet pipe 30 whose axis is oblique to a lateral wall 31 of the chamber 10.

The inlet pipe 29 opens into the chamber 10 in the same direction as the water flows at a position below that of the entrance to the chamber outlet pipe 30: this enables the liquid introduced in the chamber via the pipe 29 to flow with rotation over the whole lateral surface of the chamber 10 before leaving via the pipe 30, whereas there is no possible direct communication between the inlet and the outlet pipes.

The shape of the cutting chamber 10 is such that the incoming liquid is forced to follow a helical path at reduced speed between the entrance to and the exit from the chamber to ensure that the outlet of the inlet pipe does not interfere with the inlet of the outlet pipe.

The rotor 13, shown in more detail in Fig. 6, comprises a central hub 32 provided with several radial arms 14 upon which there are mounted cutting blades 15, all equally angled and in rubbing contact with the wall 16 in the direction of motion of the rotor.

The direction of the flow of water fed inside the chamber 10 by the pipe 29 is the same as the direction of rotation of the rotor; the amount of water supplied being such that the speed of the water rotating in the chamber 10, before entering the pipe 30 carrying along the granules of material cut by the blades 15, is substantially equal to the peripheral speed of the rotor blades, which therefore appear to be still in relation to the water. Consequently no bad effects occur as a result of hydrodynamic pressure against the cutting blades of the rotor which are not subjected to unwanted deformation and thus can be reduced in thickness relatively, it being possible to use ordinary commercial cutting blades for this purpose.

Moreover, the size of the cutting chamber 10 is chosen to allow the water inside it to move at a substantially constant speed, unperturbed by the movement of the rotor, hence there are no turbulent movements of water inside the chamber thereby bringing about a considerable improvement in the regularity of operation of the apparatus.

The position of the blades 15 in relation to the plane 16 of the extrusion head and the load exerted by the blades against the surface can be mocrometrically adjusted by rotation of the threaded part 24 of the adjusting ring 25, which causes the rotor to advance towards the extrusion head when rotated.

The adjustment can be suitably achieved by using a dial 33 provided on the adjusting ring and a graduated scale 34 provided on a fixed part of the apparatus, or vice versa, or by using similar devices to indicate the advancement of the bush 18 carrying the support shaft 17 for the rotor.

In order to allow the rotor to be positioned precisely, depending on the size and the position of the blades, which can be periodically replaced if worn, the graduated scale 34 and the dial 33 can be suitably adjusted to zero, if so required when the machine is open and the actual measurements are taken.

Several variants may be introduced, without departing from the scope of the invention in its general features.

## Claims

1. An apparatus for cutting extruded plastics material into granules to be transported by a flow of liquid, characterised in that it comprises a rotor having radial blades, operated by a motor assembly, and rotating in rubbing contact with the outlet surface of an extrusion head for the plastics material, such rotor being contained within a cylindrical cutting chamber coaxial with it, which is provided with at least one inlet and one outlet pipe for the liquid, the inlet pipe being substantially tangential to the cylindrical side wall of the cutting chamber and entering it in the same direction as the direction of rotation of the rotor, whereas the outlet pipe has its axis substantially tangential to the cylindrical side wall of the cutting chamber and leaves it, in the same direction as the movement of the liquid within it, upstream of the outlet from the inlet pipe, there also being provided members for supporting and adjusting the axial position of the rotor within the cutting chamber.

2. An apparatus for cutting extruded plastics material into granules to be transported by a flow of liquid according to Claim 1, characterised in that the cutting chamber is provided with an inlet pipe whose axis is tangential to it, the inlet pipe entering via the cylindrical side wall, whereas the outlet pipe, whose axis is also tangential, enters the chamber via the annual base wall, its axis being oblique relative to the wall and its direction being the same as that of the inlet pipe, thus defining for the liquid inside it a substantially helical path, at reduced speed.

3. An apparatus for cutting extruded plastics material into granules to be transported by a flow of liquid according to Claim 1, characterised in that the rotor is equipped with a number of radial arms projecting from a central hub, such arms carrying equally angled oblique seats intended to removably receive replaceable flat cutting blades of reduced thickness.

4. An apparatus for cutting extruded plastics material into granules to be transported by a flow of liquid according to Claim 3, characterised in that the slanting of the blade seats keeps the blades in rubbing contact with the outlet surface of the extrusion head in the planned direction of rotation of the rotor.

5. An apparatus for cutting extruded plastics material into granules to be transported by a flow of liquid according to Claim 4, characterised in that the inlet pipe takes the liquid inside the cutting chamber in the same direction as the rotor is planned to rotate.

6. An apparatus for cutting extruded plastics material into granules to be transported by a flow of liquid according to Claim 5, characterised in that the speed of rotation of the rotor and the amount of liquid allowed into the cutting chamber, relative to the size of the rotor and of the cutting chamber, are such that the speed of flow of the liquid inside the cutting chamber is substantially equal to the peripheral speed of rotation of the rotor.

7. An apparatus for cutting extruded plastics material into granules to be transported by a flow of liquid according to Claim 1, characterised in that the members for supporting and adjusting the axial position of the rotor within the cutting chamber comprise a bush housing the revolving supports for a shaft carrying the rotor and slidingly inserted within a fixed annular seat, there being provided screw means associated with a controlling adjusting ring which, when operated, enable the axial position of the bush inside the seat to be varied.

8. An apparatus for cutting extruded plastics material into granules to be transported by a flow of liquid according to Claim 7, characterised in that there is provided a graduated scale associated with the screw means, enabling the amount of axial displacement achieved by operating the screw means and the load applied to the rotor against the surface of the extrusion head to be seen.

9. An apparatus for cutting extruded plastics material into granules to be transported by a flow of water according to Claim 8, characterised in that the graduated scale can be adjusted to a given position according to the size of the blades mounted on the rotor.

Fig. 1

Fig. 6

Fig.2

0 232 927

Fig. 4

Fig. 5

Fig. 3

0 232 927